# EUROPÄISCHE PATENTSCHRIFT

(11) **EP 1 189 488 B1**
(45) Veröffentlichungstag und Bekanntmachung des Hinweises auf die Patenterteilung: **07.04.2004**
(21) Anmeldenummer: 01121834.4
(22) Anmeldetag: 11.09.2001
(51) Int. Cl.: H05B 41/36, H05B 41/282

(54) **Elektronisches selbstabgleichendes Vorschaltgerät und Verfahren zum Abgleichen eines Vorschaltgeräts**
Electronic self-calibrating ballast and method for calibrating a ballast
Ballast électronique auto-calibrant et méthode de calibrage d'un ballast

(30) Priorität: 15.09.2000 DE 10045709
(43) Veröffentlichungstag der Anmeldung: 20.03.2002
(73) Patentinhaber: TridonicAtco GmbH & Co. KG, 6851 Dornbirn (AT)
(72) Erfinder: Marent, Günter, Dipl.-Ing. (FH), 6850 Dornbirn (AT)
(74) Vertreter: Schmidt-Evers, Jürgen, Dipl.-Ing.

(56) Entgegenhaltungen:
- EP-A- 0 889 675
- EP-A- 1 045 619
- WO-A-96/20578
- DE-A- 19 850 441

## Beschreibung

Die vorliegende Erfindung betrifft ein elektronisches Vorschaltgerät für mindestens eine Gasentladungslampe gemäß Anspruch 1 bzw. ein Verfahren zum Betreiben einer Gasentladungslampe.

Gegenüber konventionellen Vorschaltgeräten zeichnen sich elektronische Vorschaltgeräte dadurch aus, daß die Gasentladungslampen bei einer gegenüber der üblichen Netzfrequenz von 50 Hz deutlich höheren Frequenz betrieben werden. Ein Lampenbetrieb im Bereich von 20-50 kHz hat eine Reduzierung der Elektrodenverluste und damit verbunden eine Erhöhung der Lichtausbeute zur Folge. Darüber hinaus bieten elektronische Vorschaltgeräte die Möglichkeit, die der Gasentladungslampe zugeführte Leistung zu steuern. Dies wird dadurch ermöglicht, daß der die Gasentladungslampe enthaltende Lastkreis ein Serienresonanzglied enthält. Eine Frequenzänderung der an den Lastkreis angelegten Wechselspannung in Richtung der Resonanzfrequenz bzw. davon weg hat eine Erhöhung bzw. Reduzierung der Leistung zur Folge. Dadurch ist die Möglichkeit gegeben, die Gasentladungslampe entweder exakt mit der gewünschten Leistung zu betreiben oder die Leistung im Sinne einer Helligkeitssteuerung zu verändern.

Die vorliegende Erfindung betrifft elektronische Vorschaltgeräte, bei denen eine Steuerung der Lampenhelligkeit nicht vorgesehen ist. In diesem Fall wird aus Kostengründen oftmals auf eine aufwendige Frequenzregelung verzichtet. Vielmehr wird die Gasentladungslampe bei einer fest vorgegebenen und unveränderlichen Frequenz betrieben, wodurch dann allerdings nicht mehr die Möglichkeit gegeben ist, durch eine nachträgliche Regelung der Frequenz die Ausgangsleistung auf einen gewünschten Wert einzustellen. Vielmehr muß von Anfang an sichergestellt werden, daß ein Lampenbetrieb exakt bei der gewünschten Leistung erfolgt.

Grundsätzlich ist das frequenzabhängige Verhalten des Lastkreises mit der darin angeordneten Gasentladungslampe, d.h. die der Lampe bei einer bestimmten Frequenz zugeführte Leistung bekannt, da die einzelnen Elemente des Lastkreises sowie deren Größen fest vorgegeben sind und der Einfluß der verschiedenen Größen auf das frequenzabhängige Verhalten bekannt ist. Um sicherzustellen, daß die Gasentladungslampe mit einer bestimmten Leistung betrieben wird, müßte somit lediglich als Festfrequenz diejenige Frequenz gewählt werden, welche die gewünschte Ausgangsleistung zur Folge hat. Aufgrund von herstellungsbedingten Bauteiltoleranzen kann jedoch ein Abweichen des frequenzabhängigen Verhaltens des Lastkreises mit der darin angeordneten Gasentladungslampe von dem idealen Verhalten nicht ausgeschlossen werden. Diese Abweichung hat zur Folge, daß - obwohl die Lampe bei der theoretisch berechneten Frequenz betrieben wird - die tatsächliche Leistung von der Nominalleistung deutlich abweicht.

Um sicherzustellen, daß trotz derartiger Toleranzen die Lampe zumindest innerhalb eines vorgegebenen Leistungsfensters betrieben wird, wird üblicherweise während der Herstellung des Vorschaltgeräts ein Abgleich durchgeführt. Dieser kann beispielsweise darin bestehen, daß das frequenzabhängige Verhalten des Lastkreises mit einer darin angeordneten Gasentladungslampe gemessen und die der gewünschten Ausgangsleistung entsprechende Frequenz bestimmt wird. Diese Frequenz wird dann als Festfrequenz, unter die Lampe später betrieben wird, vorgegeben. Eine andere Möglichkeit besteht darin, durch eine Veränderung von Induktivitäten bzw. Kapazitäten des Lastkreises sicherzustellen, daß bei der vorgegebenen Frequenz des Wechselrichters sich auch tatsächlich die gewünschte Lampenleistung ergibt.

Ein derartiger Abgleich bedeutet jedoch einen zusätzlichen Herstellungsschritt, durch den die Produktionskosten für das Vorschaltgerät erhöht werden. Gerade bei solchen "einfachen" Vorschaltgeräten, bei denen auf eine Helligkeitssteuerung verzichtet wird, ist jedoch eine Reduzierung der Herstellungskosten ein wesentlicher Gesichtspunkt. Darüber hinaus hat der während der Herstellung durchgeführte Abgleich zwar zunächst tatsächlich zur Folge, daß die Lampe bei der gewünschten Leistung betrieben wird, mit der Zeit auftretende Veränderungen innerhalb der Lampe oder von Bauteilen des Vorschaltgeräts können jedoch nicht berücksichtigt werden, so daß nicht auszuschließen ist, daß nach einem gewissen Alterungsprozeß wiederum eine Veränderung in der Ausgangsleistung eintritt.

In der Europäischen Patentanmeldung EP 1 045 619 A1, die zum Stand der Technik nach Artikel 54(3) gehört, wird ein Abgleichsverfahren von Betriebsparametern eines Lampen-Vorschaltgeräts beschrieben. Dieses Verfahren beinhaltet eine Regelschleife, mittels der eine sukzessive Korrektur eines Ansteuerungsparameters für den Spannungswandler des Vorschaltgeräts durchgeführt wird. Das Verfahren wird mit einer im Lastkreis geschalteten kalibrierten Last anstelle einer Lampe durchgeführt. Zunächst wird dabei ein bestimmter Betriebszustand eingestellt und daraufhin ein Istwert des Betriebsparameters erfasst. Dieser wird dann mit einem Sollwert verglichen und auf Grundlage dieses Vergleichs ein Korrekturwert ermittelt.

Die Europäische Patentanmeldung EP 0 889 675 A1 beschreibt eine Schaltungsanordnung zum Betreiben einer Gasentladungslampe, wobei zu Beginn des Lampenbetriebs eine Testmessung durchgeführt wird, um den Lampentyp festzustellen. Im späteren Lampenbetrieb wird die Gasentladungslampe dann mit den für den erkannten Lampentyp erforderlichen Betriebsparametern angesteuert. Zur Erkennung des Lampentyps wird die für jeden in Frage kommenden Lampentyp charakteristische Temperaturabhängigkeit des Widerstandswertes der Heizwendeln genutzt.

In der deutschen Offenlegungsschrift DE 198 50 441 A1 ist ein Vorschaltgerät zum Betrieb einer Leuchtstofflampe beschrieben, das zu Beginn des Lampenbetriebs den Lampentyp feststellt und die Lampe später unter geeigneten Betriebsbedingungen betreibt. Hierzu wird die für jeden in Frage kommenden Lampentyp charakteristische Abhängigkeit der Lampenspannung vom Lampenstrom genutzt. Mit Hilfe vorab ermittelter und abgespeicherter Spannungswerte kann dann aufgrund einer Messung des Lampenstroms überprüft werden, ob die Lampe mit dem geeigneten Strom versorgt wird.

Die internationale Offenlegungsschrift WO 96/20578 beschreibt ein Verfahren sowie eine Schaltungsanordnung zum Betreiben einer Hochdruck-Entladungslampe. Insbesondere soll dabei das Auftreten von akustischen Resonanzen vermieden werden. Dazu werden mittels Testmessungen diejenigen Frequenzen ermittelt, bei denen akustische Resonanzen auftreten. Beim späteren Betrieb der Hochdruck-Entladungslampe werden die zuvor ermittelten kritischen Frequenzen vermieden.

Es ist daher Aufgabe der vorliegenden Erfindung, ein elektronisches Vorschaltgerät zum Betreiben mindestens einer Gasentladungslampe anzugeben, bei dem während eines Normalbetriebs die Gasentladungslampe mit einer fest vorgegebenen und unveränderlichen Frequenz betrieben wird, wobei sichergestellt ist, daß die Lampe zumindest im wesentlichen bei einer vorgegebenen Leistung betrieben wird. Auf einen während der Herstellung des elektronischen Vorschaltgerätes durchgeführten Abgleich soll verzichtet werden, alterungsbedingte Veränderungen sollen ausgeglichen werden.

Die Aufgabe wird durch ein elektronisches Vorschaltgerät zum Betreiben mindestens einer Gasentladungslampe gemäß dem Anspruch 1 bzw. durch ein Verfahren zum Betreiben einer Gasentladungslampe gemäß dem Anspruch 11 gelöst. Das erfindungsgemäße Vorschaltgerät weist einen mit Gleichspannung gespeisten Wechselrichter zum Erzeugen einer hochfrequenten Wechselspannung auf, an dessen Ausgang ein Lastkreis angeschlossen ist, der einen Serienresonanzkreis sowie die mindestens eine Gasentladungslampe enthält. Dabei ist in einem Normalbetriebszustand der Gasentladungslampe die Betriebsfrequenz der an den Lastkreis angelegten Wechselspannung unverändert konstant.

Erfindungsgemäß weist das Vorschaltgerät eine Steuerschaltung auf, welche zumindest eine Testmessung bezüglich wenigstens eines frequenzabhängigen Betriebsparameters des Lastkreises durchführt und auf Grundlage des Meßergebnisses eine für die gewünschte Leistung geeignete Betriebsfrequenz einstellt. Das erfindungsgemäße Vorschaltgerät ist somit in der Lage, selbständig eine Betriebsfrequenz zu bestimmen, durch welche sich in etwa die gewünschte Ausgangsleistung ergibt, wobei im Gegensatz zu dimmbaren Vorschaltgeräten jedoch keine Regelung der Frequenz stattfindet, sondern die Betriebsfrequenz je Lampenstart einmal bestimmt wird und dann während des anschließenden Normalbetriebs unverändert bleibt. Die hierfür benötigte Steuerschaltung ist wesentlich einfacher aufgebaut als Schaltungen zur Frequenzregelung. Darüber hinaus ist der zuvor beschriebene Abgleich während der Herstellung nicht mehr notwendig, so daß das erfindungsgemäße Vorschaltgerät auch kostengünstig herzustellen ist. Da die Betriebsfrequenz bei jedem Start der Lampe neu bestimmt wird, werden ferner altersbedingte Veränderungen des Lastkreises oder der Lampe berücksichtigt. Damit ist gewährleistet, daß auch über einen langen Zeitraum hinweg die Gasentladungslampe mit der gewünschten Leistung betrieben werden kann.

Das erfindungsgemäße Verfahren zum Betreiben mindestens einer Gasentladungslampe besteht darin, daß je Lampenstart genau einmal ein frequenzabhängiger Parameter der Gasentladungslampe bzw. eines die Gasentladungslampe enthaltenen Lastkreises erfaßt wird und proportional zu der Differenz des Testmessergebnisses von einem Refernzwert eine Betriebsfrequenz bestimmt wird. Nach der Zündung der Lampe wird diese dann bei der fest vorgegebenen Betriebsfrequenz betrieben. Dem erfindungsgemäßen Verfahren zur Folge ist es auch nicht notwendig, das frequenzabhängige Verhalten der Lampe bzw. des Lastkreises über den gesamten Frequenzbereich zu bestimmen. Vielmehr kann die Messung lediglich bei einer bestimmten Frequenz durchgeführt und anhand des Ergebnisses dann die geeignete Betriebsfrequenz bestimmt werden. Im Gegensatz zu einem aufwendigen Abgleich bzw. zu einer Regelung ist das erfindungsgemäße Bestimmen der Betriebsfrequenz wesentlich einfacher und schneller durchzuführen.

Weiterbildungen der Erfindung sind Gegenstand der Unteransprüche. Die Bestimmung der Betriebsfrequenz soll proportional zu der Abweichung des während der Testmessung erfaßten Parameters von einem Referenzwert erfolgen. So wird erfindungsgemäß während der Testmessung ein Betriebsparameter des Lastkreises bei einer vorgegebenen Testfrequenz erfaßt und das Ergebnis mit einem Referenzwert verglichen. Vorzugsweise liegt dabei die Testfrequenz oberhalb der Betriebsfrequenz für den Normalbetriebszustand, d.h. ebenso wie die Betriebsfrequenz auf dem induktiven Ast der Resonanzkurve. Für den Normalbetriebszustand wird dann eine gegenüber einer Nominalfrequenz erhöhte Betriebsfrequenz festgelegt, falls der in der Testmessung erfaßte Parameter größer als der Referenzwert ist. Ergibt sich bei der Messung jedoch ein kleinerer Meßwert als der Referenzwert, so wird eine gegenüber der Nominalfrequenz reduzierte Betriebsfrequenz eingestellt. Erfindungsgemäß ist dabei die Verschiebung der Betriebsfrequenz gegenüber der Nominalfrequenz proportional zur Differenz zwischen dem in der Testmessung erfaßten Parameter und dem Referenzwert. Dies gestattet eine sehr einfache aber auch zuverlässige Abschätzung einer für die gewünschte Lampenleistung notwendigen Betriebsfrequenz.

Der in der Testmessung erfaßte Parameter gibt dabei Auskunft über die Ausgangsleistung des Vorschaltgerätes, wobei es sich beispielsweise um den durch den Lastkreis fließenden Strom handeln kann. Erfindungsgemäß wird die Testmessung und die Festlegung der Betriebsfrequenz noch vor dem Normalbetriebszustand der Gasentladungslampe, also noch vor der vollständigen Ausbildung Gasentladung durchgeführt. Dies kann beispielsweise während einer Vorheizphase der Gasentladungslampe erfolgen. Zur Bereitstellung der gewünschten Betriebsfrequenz kann das erfindungsgemäße Vorschaltgerät einen Festfrequenzoszillator aufweisen, dessen Frequenz von einer in der Steuerschaltung enthaltenen Logikschaltung in die Betriebsfrequenz umgesetzt wird.

Im folgenden soll die Erfindung anhand der beiliegenden Zeichnung näher erläutert werden. Es zeigen:
- Fig. 1: eine schematische Darstellung der erfindungsgemäßen Steuerschaltung des elektronischen Vorschaltgerätes; und
- Fig. 2 und 3: zwei Beispiele zur Durchführung der Testmessung und Bestimmung der Betriebsfrequenz.

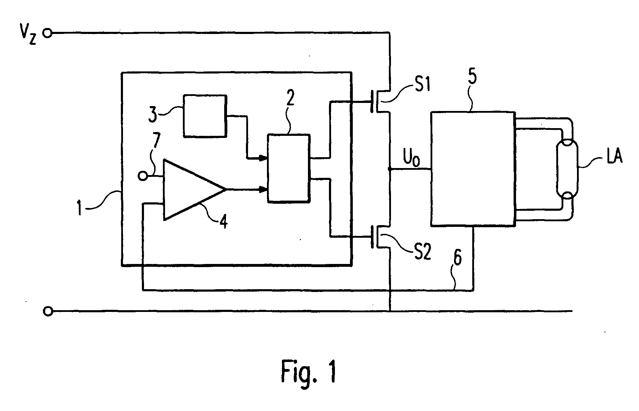

Figur 1 zeigt den Wechselrichter, den Lastkreis (5) mit der Gasentladungslampe (LA) sowie die erfindungsgemäße Steuerschaltung (1) des Vorschaltgerätes. Der aus zwei steuerbaren Schaltern, im vorliegenden Beispiel aus zwei Feldeffekttransistoren S 1 und S2 bestehende Wechselrichter wird mit einer gleichgerichteten und geglätteten Zwischenkreisspannung V_{Z} gespeist, die durch eine mit dem Versorgungsnetz verbundene nicht dargestellte Gleichrichterschaltung - üblicherweise einen Vollbrückengleichrichter - sowie durch eine Glättungsschaltung - beispielsweise einen Schaltregler - erzeugt wird. Die beiden Feldeffekttransistoren S1 und S2 der Halbbrücke werden durch die Steuerschaltung 1 abwechselnd leitend geschaltet bzw. gesperrt, so daß an dem gemeinsamen Knotenpunkt der beiden Feldeffekttransistoren S1, S2 eine hochfrequente Wechselspannung U₀ entsteht, die dem Lastkreis 5 mit der darin angeschlossen Gasentladungslampe LA zugeführt wird.

Während des Normalbetriebs der Gasentladungslampe LA, d.h. nach deren Zündung, werden die beiden Feldeffekttransistoren S1 und S2 mit einer fest vorgegebenen Betriebsfrequenz betrieben. Das Ansteuern der Feldeffekttransistoren S1, S2 erfolgt durch eine Logikschaltung 2, die das von einem Festfrequenzoszillator 3 erzeugte hochfrequente Taktsignal in geeignete Steuersignale mit der gewünschten Betriebsfrequenz umsetzt. Die Logikschaltung 2 ist dabei auch für die Durchführung der Testmessung sowie die Bestimmung der Betriebsfrequenz zuständig. Hierzu wird noch vor der Zündung der Lampe LA dem Lastkreis 5 eine Wechselspannung mit einer vorgegebenen Testfrequenz zugeführt und ein frequenzabhängiger Betriebsparameter des Lastkreises 5 erfaßt. Dieser Parameter wird über eine Eingangsleitung 6 der Steuerschaltung 1 zugeführt. Der erfaßte Wert bildet ein erstes Eingangssignal für einen ebenfalls innerhalb der Steuerschaltung 1 angeordneten Komparator 4. Das dem Komparator 4 über die zweite Zuführungsleitung 7 zugeführte Eingangssignal stellt einen Referenzwert dar, der mit dem erfaßten Parameter des Lastkreises 5 verglichen wird. Auf Basis des Vergleichsergebnisses bestimmt die Logikschaltung 2 die geeignete Betriebsfrequenz.

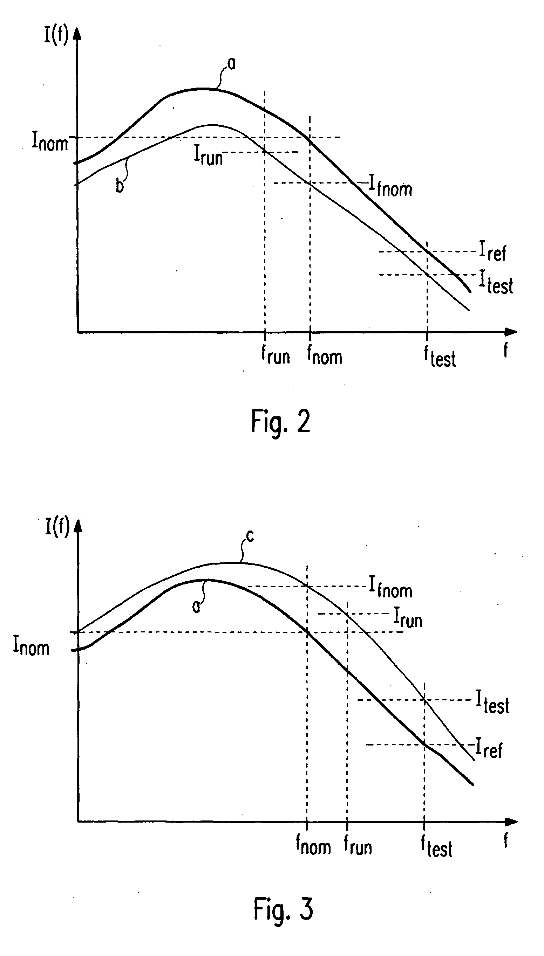

Im folgenden soll anhand von Figur 2 die Durchführung der Testmessung sowie die Bestimmung der Betriebsfrequenz erläutert werden. Figur 2 zeigt zwei Kurven, die das frequenzabhängige Verhalten des Lastkreises darstellen. Im vorliegenden Beispiels ist hierfür der Wert des durch den Lastkreis fließenden Stromes I in Abhängigkeit von der Frequenz f dargestellt. Die fett gezeichnete Kurve a zeigt das frequenzabhängige Verhalten im Idealfall, d.h. für den Fall, daß sämtliche Bauelemente des Lastkreises sowie die Gasentladungslampe die zuvor festgelegten Eigenschaften aufweisen. Um in diesem Idealfall während des Normalbetriebs eine bestimmte Ausgangsleistung zu erzielen bzw. die Lampe mit einem bestimmten Nominalstrom Iₙₒₘ zu betreiben, wäre eine Wechselspannung mit einer vorgegebenen Nominalfrequenz fₙₒₘ notwendig. Wie eingangs erläutert, können jedoch Toleranzen der Bauelemente des Vorschaltgeräts zu einer Verschiebung der Resonanzkurve führen, im dargestellten Beispiel in Figur 2 zu der nach unten verschobenen Resonanzkurve b. Würde in diesem Fall dem Lastkreis eine Wechselspannung mit der Nominalfrequenz fₙₒₘ zugeführt werden, so würde sich nicht der gewünschte Nominalstrom Iₙₒₘ ergeben, sondern der deutlich niedrigere Strom I_{fnom.} Die Abweichung kann dabei so groß sein, daß nicht mehr gewährleistet ist, daß die Lampe innerhalb des vorgesehenen Leistungsfensters betrieben wird.

Um dies zu vermeiden, wird erfindungsgemäß vor der Zündung der Lampe, beispielsweise während einer Vorheizphase, eine Testmessung durchgeführt. Dabei wird an den Lastkreis eine Wechselspannung mit einer Testfrequenz fₜₑₛₜ angelegt und der sich dabei ergebende Strom Iₜₑₛₜ erfaßt. Dieser ist im dargestellten Beispiel aufgrund der Verschiebung der Resonanzkurve niedriger als ein Referenzwert I_{ref}, der sich im Idealfall ergeben würde. Der gemessene Wert Iₜₑₛₜ sowie der Referenzwert I_{ref} bilden die Eingangssignale für den in Figur 1 dargestellten Komparator 4. Dessen Vergleichsergebnis wird der Logikschaltung zugeführt. Anhand der Differenz zwischen dem Referenzwert I_{ref} und dem gemessenen Wert Iₜₑₛₜ bestimmt die Logikschaltung schließlich die Betriebsfrequenz fᵣᵤₙ, welche gegenüber der Nominalfrequenz fₙₒₘ nach unten verschoben ist. Wie Figur 2 entnommen werden kann, hat die Verschiebung der Betriebsfrequenz fᵣᵤₙ in Richtung des Resonanzpeaks der Kurve b zur Folge, daß sich ein Lastkreisstrom Iᵣᵤₙ ergibt, der deutlich näher an dem Nominalstrom Iₙₒₘ liegt als dies bei einem Lampenbetrieb mit der Nominalfrequenz fₙₒₘ der Fall wäre.

Figur 3 zeigt ein zweites Beispiel, in dem die sich aufgrund von Bauteiltoleranzen ergebene Resonanzkurve c gegenüber der Idealkurve a nach oben verschoben ist. Ein Lampenbetrieb bei der Nominalfrequenz fₙₒₘ hätte nun zur Folge, daß die Lampe mit einer deutlich zu hohen Leistung betrieben wird. Dieser Fehler kann wiederum durch die erfindungsgemäße Testmessung deutlich reduziert werden, wobei das Ergebnis der Testmessung nun besagt, daß der gemessene frequenzabhängige Betriebsparameter Iₜₑₛₜ höher als der Referenzwert I_{ref} ist. Infolgedessen wird auch eine gegenüber der Nominalfrequenz fₙₒₘ erhöhte Betriebsfrequenz fᵣᵤₙ gewählt. Die Verschiebung der Betriebsfrequenz fᵣᵤₙ nach oben hat zur Folge, daß sich ein Strom Iᵣᵤₙ ergibt, der wiederum zumindest in etwa der gewünschten Leistung entspricht.

In dem dargestellten Ausführungsbeispiel liegen die Nominalfrequenz fₙₒₘ, die Betriebsfrequenz fᵣᵤₙ und die Testfrequenz fₜₑₛₜ auf dem induktiven, d.h. dem abfallenden Ast der Resonanzkurve. In diesem Fall hat die Messung eines größeren frequenzabhängigen Parameters Iₜₑₛₜ im Vergleich zu dem Referenzwert I_{ref} eine Erhöhung der Betriebsfrequenz fᵣᵤₙ im Vergleich zur Nominalfrequenz fₙₒₘ zur Folge, während eine Messung eines gegenüber dem Referenzwert I_{ref} kleineren Meßwertes Iₜₑₛₜ eine Reduzierung der Betriebsfrequenz fᵣᵤₙ zur Folge hat. Die Verschiebung kann dabei derart gewählt werden, daß diese proportional zur Differenz zwischen dem in der Testmessung erfaßten Wert Iₜₑₛₜ und dem Referenzwert I_{ref} ist. Dabei wird davon ausgegangen, daß der induktive Ast der Resonanzkurve zumindest innerhalb einer gewissen Näherung linear verläuft.

Im Vergleich zu einer aufwendigen Frequenzregelung bzw. einem während der Herstellung durchgeführten Abgleich gewährleistet das erfindungsgemäße Verfahren einen Lampenbetrieb nur in etwa bei der vorgegebenen Nominalleistung. Ein Betrieb bei exakt der gewünschten Leistung kann hierdurch nicht mit Sicherheit gewährleistet werden. Dies ist jedoch auch nicht unbedingt notwendig, da es üblicherweise ausreichend ist, wenn der Betrieb zumindest innerhalb eines vorgegebenen Leistungsfensters erfolgt. Das erfindungsgemäße Verfahren hat gegenüber einer Frequenzregelung den Vorteil, daß es wesentlich einfacher und schneller durchzuführen ist. Im Vergleich zu einem einmalig durchgeführten Abgleich können alterungsbedingte Änderungen ebenfalls ausgeglichen werden. Darüber hinaus ist das erfindungsgemäße Verfahren auch nicht auf einen aus einer Halbbrückenanordnung bestehenden Wechselrichter beschränkt, sondern kann bei sämtlichen Schaltungsanordnungen - beispielsweise auch bei Vollbrückenschaltungen - und sämtlichen Lastkreisen, die ein frequenzabhängiges Verhalten zeigen, zum Einsatz kommen. Im Rahmen der Testmessung kann anstelle des Lastkreisstromes auch jeder andere Parameter gemessen werden, der Auskunft über das frequenzabhängige des Lastkreises gibt.

## Patentansprüche

1. Elektronisches selbstabgleichendes Vorschaltgerät zum Betreiben mindestens einer Gasentladungslampe (LA), mit einem mit Gleichspannung (Vz) gespeisten Wechselrichter (S1, S2) zum Erzeugen einer hochfrequenten Wechselspannung (U₀), an dessen Ausgang ein einen Serienresonanzkreis sowie die mindestens eine Gasentladungslampe (LA) enthaltender Lastkreis (5) angeschlossen ist,
wobei in einem Normalbetriebszustand der Gasentladungslampe (LA) eine Betriebsfrequenz (fᵣᵤₙ) der an den Lastkreis (5) angelegten Wechselspannung (U₀) konstant ist,
weiterhin aufweisend eine Steuerschaltung (1) zur Durchführung wenigstens einer Testmessung je Lampenstart in einer Phase vor dem Zünden der Gasentladungslampe (LA) bezüglich wenigstens eines frequenzabhängigen Betriebsparameters des Lastkreises (5),
wobei die Steuerschaltung (1) dazu ausgelegt ist, nach der Testmessung die Betriebsfrequenz (fᵣᵤₙ) durch Verschieben gegenüber einer Nominalfrequenz (f_{Nom}) proportional zu der Differenz des Testmessergebnisses von einem vorgegebenen, der Nominalfrequenz (f_{Nom}) zugeordneten Referenzwert (I_{ref}), festzulegen.

2. Elektronisches Vorschaltgerät nach Anspruch 1,
**dadurch gekennzeichnet,**
**daß** die Testfrequenz (fₜₑₛₜ) oberhalb der Betriebsfrequenz (fᵣᵤₙ) für den Normalbetriebszustand liegt.

3. Elektronisches Vorschaltgerät nach Anspruch 2,
**dadurch gekennzeichnet,**
**daß** die Steuerschaltung (1) für den Normalbetriebszustand eine gegenüber der Nominalfrequenz (fₙₒₘ) erhöhte Betriebsfrequenz (fᵣᵤₙ) festlegt, falls der in der Testmessung erfaßte Parameter (Iₜₑₛₜ) größer ist als der Referenzwert (I_{ref}),
und **daß** die Steuerschaltung (1) für den Normalbetriebszustand eine gegenüber der Nominalfrequenz (fₙₒₘ) reduzierte Betriebsfrequenz (fᵣᵤₙ) festlegt, falls der in der Testmessung erfaßte Parameter (Iₜₑₛₜ) kleiner ist als der Referenzwert (I_{ref}).

4. Elektronisches Vorschaltgerät nach einem der Ansprüche 2 oder 3,
**dadurch gekennzeichnet,**
**daß** der in der Testmessung erfaßte Parameter (Iₜₑₛₜ) der durch den Lastkreis fließende Strom (Iₜₑₛₜ) ist.

5. Elektronisches Vorschaltgerät nach Anspruch 4,
**dadurch gekennzeichnet,**
**daß** die Testmessung in einer Vorheizphase der Gasentladungslampe (LA) durchgeführt wird.

6. Elektronisches Vorschaltgerät nach einem der vorherigen Ansprüche,
**dadurch gekennzeichnet,**
**daß** das die Steuerschaltung (1) einen Festfrequenzoszillator (3) sowie eine Logikschaltung (2) zum Umsetzen der von dem Festfrequenzoszillator (3) erzeugten Frequenz in die Betriebsfrequenz (fᵣᵤₙ) aufweist.

7. Verfahren zum Abgleichen eines EVGs zum Betreiben mindestens einer Gasentladungslampe (LA) mit folgenden Schritten:
a) Vorgabe eines Referenzwerts für einen frequenzabhängigen Parameters (Iₜₑₛₜ) eines die Gasentladungslampe (LA) enthaltenden Lastkreises (5),
b) Erfassen des tatsächlichen Werts des frequenzabhängigen Parameters (Iₜₑₛₜ) des Lastkreises (5);
c) Bestimmen einer Betriebsfrequenz (fᵣᵤₙ) in Abhängigkeit von dem erfaßten Parameter (Iₜₑₛₜ); und
d) Betreiben der Gasentladungslampe (LA) bei der Betriebsfrequenz (fᵣᵤₙ),
wobei das Bestimmen der Betriebsfrequenz (fᵣᵤₙ) genau einmal je Lampenstart in einer Phase vor dem Zünden der Gasentladungslampe (LA) erfolgt und die Betriebsfrequenz (fᵣᵤₙ) durch Verschieben genenüber der Nominalfrequenz (f_{Nom}) proportional zu der Differenz des tatsächlichen Werts des gemessenen Parameters (Iₜₑₛₜ) von dem Referenzwert (I_{ref}) für diesen Parameter bestimmt wird.

8. Verfahren nach Anspruch 7,
**dadurch gekennzeichnet,**
**daß** die Testfrequenz (fₜₑₛₜ) oberhalb der Betriebsfrequenz (fᵣᵤₙ) liegt.

9. Verfahren nach Anspruch 8,
**dadurch gekennzeichnet,**
**daß** eine gegenüber der Nominalfrequenz (fₙₒₘ) erhöhte Betriebsfrequenz (fᵣᵤₙ) bestimmt wird, falls der erfaßte frequenzabhängige Parameter (Iₜₑₛₜ) größer als der Referenzwert (I_{ref}) ist,
und eine gegenüber der Nominalfrequenz (fₙₒₘ) reduzierte Betriebsfrequenz (fᵣᵤₙ) bestimmt wird, falls der erfaßte frequenzabhängigen Parameter (Iₜₑₛₜ) kleiner als der Referenzwert (I_{ref}) ist.

## Claims

1. Electronic self-calibrating ballast for the operation of at least one gas discharge lamp (LA), having an inverter (S1, S2), fed with a d. c. voltage (V_{Z}), for the generation of a high frequency a.c. voltage (U₀), to the output of which there is connected a series resonance circuit and a load circuit (5) containing the at least one gas discharge lamp (LA),
wherein in a normal operating condition of the gas discharge lamp (LA) an operating frequency (fᵣᵤₙ) of the a.c. voltage (U₀) applied to the load circuit (5) is constant,
further comprising a control circuit (1) for carrying out at least one test measurement per lamp start, in a phase before the ignition of the gas discharge lamp (LA), with regard to at least one frequency-dependent operating parameter of the load circuit (5),
wherein the control circuit (1) is configured for the purpose of setting the operating frequency (fᵣᵤₙ), after the test measurement, by displacement with respect to a nominal frequency (fₙₒₘ) proportional to the difference of the test measurement result from a predetermined reference value (I_{ref}) associated with the nominal frequency (fₙₒₘ).

2. Electronic balance according to claim 1,
**characterised in that**,
the test frequency (fₜₑₛₜ) lies above the operating frequency (fᵣᵤₙ) for the normal operating condition.

3. Electronic balance according to claim 2,
**characterised in that**,
the control circuit (1) sets for the normal operating condition an operating frequency (fᵣᵤₙ) increased with respect to the nominal frequency (fₙₒₘ), if the parameter detected in the test measurement (Iₜₑₛₜ) is greater than the reference value (I_{ref}),
and **in that** the control circuit (1) sets for the normal operating condition an operating frequency (fᵣᵤₙ) reduced with respect to the nominal frequency (fₙₒₘ), if the parameter (Iₜₑₛₜ) detected in the test measurement is smaller than the reference value (I_{ref}).

4. Electronic ballast according to any of claims 2 or 3,
**characterised in that**,
the parameter (Iₜₑₛₜ) detected in the test measurement is the current (Iₜₑₛₜ) flowing through the load circuit.

5. Electronic ballast according to claim 4,
**characterised in that**,
the test measurement is carried out in a pre-heating phase of the gas discharge lamp (LA).

6. Electronic ballast according to any preceding claim,
**characterised in that**,
the control circuit (1) has a fixed frequency oscillator (3) and a logic circuit (2) for transforming the frequency generated by the fixed frequency oscillator (3) into the operating frequency (fᵣᵤₙ).

7. Method of calibrating an electronic ballast for the operation of at least one gas discharge lamp (LA), having the following steps:
a) predetermining a reference value for a frequency-dependent parameter (Iₜₑₛₜ) of a load circuit (5) containing the gas discharge lamp (LA),
b) detection of the actual value of the frequency-dependent parameter (Iₜₑₛₜ) of the load circuit (5);
c) setting an operating frequency (fᵣᵤₙ) in dependence upon the detected parameter (Iₜₑₛₜ); and
d) operating the gas discharge lamp (LA) with the operating frequency (fᵣᵤₙ),
wherein the setting of the operating frequency (fᵣᵤₙ) is effected exactly once per lamp start, in a phase before the ignition of the gas discharge lamp (LA), and the operating frequency (fᵣᵤₙ) is set by displacement with respect to the nominal frequency (fₙₒₘ) proportional to the difference of the actual value of the measured parameter (Iₜₑₛₜ) from the reference value (I_{ref}) for this parameter.

8. Method according to claim 7,
**characterised in that**,
the test frequency (fₜₑₛₜ) lies above the operating frequency (fᵣᵤₙ).

9. Method according to claim 8,
**characterised in that**,
an operating frequency (fᵣᵤₙ) is set which is increased with respect to the nominal frequency (fₙₒₘ), if the detected frequency-dependent parameter (Iₜₑₛₜ) is greater than the reference value (I_{ref}),
and an operating frequency (fᵣᵤₙ) is set which is reduced with respect to the nominal frequency (fₙₒₘ), if the detected frequency-dependent parameter (Iₜₑₛₜ) is smaller than the reference value (I_{ref}).

## Revendications

1. Ballast à électronique à étalonnage automatique destiné à faire fonctionner au moins une lampe à décharge gazeuse (LA), lequel ballast comporte
un onduleur (S1, S2), alimenté en tension continue (Vz) et destiné à générer une tension alternative de haute fréquence (U₀), dont la sortie est raccordée à un circuit de charge (5) contenant un circuit résonant série ainsi que l'au moins une lampe à décharge gazeuse (LA), la fréquence de fonctionnement (fᵣᵤₙ) de la tension alternative (U₀) appliquée au circuit de charge (5) étant en constante lorsque la lampe à décharge gazeuse (LA) est en fonctionnement normal,
et un circuit de commande (1) destiné à effectuer à chaque démarrage de la lampe dans une phase précédant l'allumage de la lampe à décharge gazeuse (LA) au moins une mesure de test relative à au moins un paramètre de fonctionnement, fonction de la fréquence, du circuit de charge (5), le circuit de commande (1) étant étudié pour déterminer après la mesure de test la fréquence de fonctionnement (fᵣᵤₙ) par un décalage, par rapport à une fréquence nominale (fₙₒₘ), qui est proportionnel à la différence entre le résultat de la mesure de test et une valeur de référence (l_{ref}) prédéterminée associée à la fréquence nominale (fₙₒₘ).

2. Ballast électronique selon la revendication 1, **caractérisé en ce que** la fréquence de test (fₜₑₛₜ) est supérieure à la fréquence de fonctionnement (fᵣᵤₙ) en fonctionnement normal.

3. Ballast électronique selon la revendication 2, **caractérisé en ce que**
le circuit de commande (1) détermine pour l'état de fonctionnement normal une fréquence de fonctionnement (fᵣᵤₙ) majorée par rapport à la fréquence nominale (fₙₒₘ) dans le cas où le paramètre (Iₜₑₛₜ) détecté lors de la mesure de test est supérieur à la valeur de référence (I_{ref}), et
le circuit de commande (1) détermine pour l'état de fonctionnement normal une fréquence de fonctionnement (fᵣᵤₙ) réduite par rapport à la fréquence nominale (fₙₒₘ) dans le cas où le paramètre (Iₜₑₛₜ) détecté lors de la mesure de test est inférieur à la valeur de référence (I_{ref}).

4. Ballast électronique selon l'une des revendications 2 ou 3, **caractérisé en ce que** le paramètre (Iₜₑₛₜ) détecté lors de la mesure de test est le courant (Iₜₑₛₜ) circulant dans le circuit de charge.

5. Ballast électronique selon la revendication 4, **caractérisé en ce que** la mesure de test est effectuée dans une phase de préchauffage de la lampe à décharge gazeuse (LA).

6. Ballast électronique selon l'une des revendications précédentes, **caractérisé en ce que** le circuit de commande (1) comporte un oscillateur de fréquence fixe (3) ainsi qu'un circuit logique (2) destiné à convertir la fréquence générée par l'oscillateur de fréquence fixe (3) en la fréquence de fonctionnement (fᵣᵤₙ).

7. Procédé d'étalonnage d'un ballast électronique destiné à faire fonctionner au moins une lampe à décharge gazeuse (LA), lequel le procédé comporte les étapes suivantes consistant à :
a) prédéfinir une valeur de référence pour un paramètre (Iₜₑₛₜ), fonction de la fréquence, d'un circuit de charge (5) contenant la lampe à décharge gazeuse (LA),
b) détecter la valeur réelle du paramètre (Iₜₑₛₜ), fonction de la fréquence, du circuit de charge (5),
c) déterminer une fréquence de fonctionnement (fᵣᵤₙ) en fonction du paramètre détecté (Iₜₑₛₜ), et
d) faire fonctionner la lampe à décharge gazeuse (LA) à la fréquence de fonctionnement (fᵣᵤₙ),
la détermination de la fréquence de fonctionnement (fᵣᵤₙ) étant effectuée une seule fois à chaque démarrage de la lampe dans une phase précédant l'allumage de la lampe à décharge gazeuse (LA) et la fréquence de fonctionnement (fᵣᵤₙ) étant déterminée par un décalage, par rapport à la fréquence nominale (fₙₒₘ), qui est proportionnel à la différence entre la valeur réelle du paramètre mesuré (Iₜₑₛₜ) et la valeur de référence (I_{ref}) pour ce paramètre.

8. Procédé selon la revendication 7, **caractérisé en ce que** la fréquence de test (fₜₑₛₜ) est supérieure à la fréquence de fonctionnement (fᵣᵤₙ).

9. Procédé selon la revendication 8, **caractérisé en ce que** l'on détermine une fréquence de fonctionnement (fᵣᵤₙ) majorée par rapport à la fréquence nominale (fₙₒₘ) dans le cas où le paramètre (Iₜₑₛₜ) détecté, fonction de la fréquence, est supérieure à la valeur de référence (Iₜₑₛₜ), et on détermine une fréquence de fonctionnement (fᵣᵤₙ) réduite par rapport à la fréquence nominale (fₙₒₘ) dans le cas où le paramètre (Iₜₑₛₜ) détecté, fonction de la fréquence, est inférieure à la valeur de référence (Iₜₑₛₜ).
